# EUROPEAN PATENT APPLICATION

(11) **EP 1 533 676 A1**
(43) Date of publication of application: **25.05.2005**
(21) Application number: 04256091.2
(22) Date of filing: 01.10.2004
(51) Int. Cl.: G06F 1/00, H04L 9/32

(54) **System and method for processing protected data with approved applications**

(30) Priority: 09.10.2003 GB 0323688
(71) Applicant: Vodafone Group PLC, Newbury Berkshire RG14 2FN (GB)
(72) Inventor: Irwin, James Anthony, Leafield, Oxon OX29 9QG (GB); Mudie, George Stronach, Thatcham RG18 3LF (GB)
(74) Representative: Foster, Mark Charles

(57) **Abstract**

A user has a key (5) which may, for example, be in the form of a smart card or SIM used in a cellular telephone system. The user obtains content (6) from a Content Provider. The content comprises encrypted data recorded, for example, on suitable media - such as, for instance, audio or video content recorded on a DVD or CD. A hardware device (8) is in principle capable of receiving the media (6), decrypting it and allowing the user to play it or otherwise "consume" it. The hardware (8) contains a suitable application (10) in the form of software for enabling the content to be played when authorised. If the application (10) is an "approved application" (that is, trusted software from a known software provider), a licensing system (12) can provide the key (5) with a licence for allowing the content to be decrypted and consumed by the application (10) on the device (8), subject to a user authentication process. The licence is therefore not restricted to a particular device (8) but to a particular approved application.

## Description

The invention relates to data processing. In embodiments of the invention to be described in more detail below by way of example, controlled distribution of data is carried out using encrypted digital files which can be decrypted by licensed users. More particularly, the data distribution is managed by a licensing regime so that the data can be used only with approved applications.

According to the invention, there is provided a data processing system, in which a content provider provides encoded content to which users may have access subject to predetermined authorisation and using application software appropriate to the type of encoded content, comprising first storage means for storing a list of approved applications and situated in a portable location, first processing means situated in the portable location and operative in response to a requesting application attempting to access the encoded content for a particular user to determine in dependence on the stored list of approved applications if the requesting application is an approved application, second storage means situated in the portable location for storing for each user authorisations which are respective to different encoded content, and second processing means situated in the portable location for allowing the requesting application to access the encoded content in response to the request from the requesting application if it has been determined to be an approved application and if an authorisation is stored in the second storage means for that user in relation to the encoded content, the access being subject to that authorisation.

According to the invention, there is further provided a data processing method, in which a content provider provides encoded content to which users may have access subject to predetermined authorisation and using application software appropriate to the type of encoded content, comprising the steps of storing a list of approved applications in a portable location, responding to a requesting application attempting to access the encoded content for a particular user by determining in dependence on the stored list of approved applications if the requesting application is an approved application, storing for each user in the portable location authorisations which are respective to encoded content provided by different content providers or respective to different encoded content, and allowing the requesting application to access the encoded content in response to the request from the requesting application if it has been determined to be an approved application and if an authorization is stored for that user in relation to the encoded content, the access being subject to that authorization.

Data processing systems and methods according to the invention will now be described, by way of example only, with reference to the accompanying diagrammatic drawings in which:
Figure 1 is a block diagram giving an overview of one of the systems;
Figure 2 (comprising separate sub-Figures 2A, 2B, 2C and 2D) is a flow chart for explaining the operation of the system of Figure 1;
Figure 3 is a block diagram showing how a user's key may be arranged in the system of Figures 1 and 2;
Figure 4 diagrammatically shows an entry in an Application Store of the user's key of Figure 3; and
Figure 5 diagrammatically shows an entry in a Licence Store in the user's key of Figure 4.

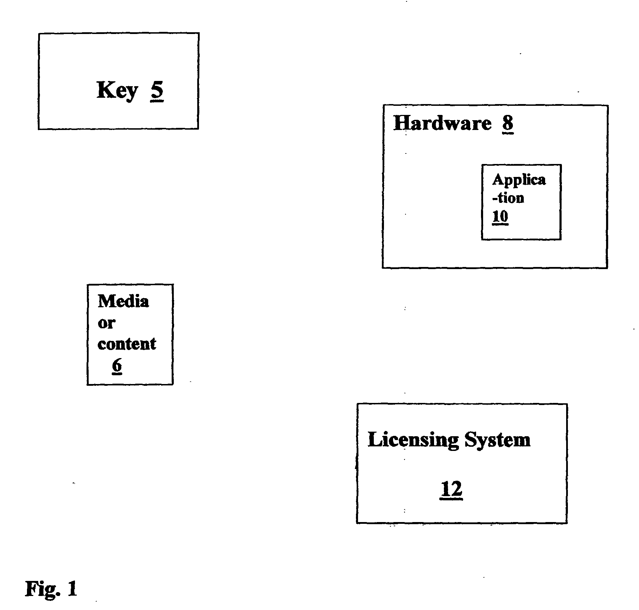

Figure 1 shows an overview of one of the systems. Here, a user has a key 5 which may, for example, be in the form of a smart card or SIM (Subscriber Identity Module) used in a cellular telephone system of the GSM, GPRS, 3G or UMTS type. The user obtains content (shown diagrammatically at 6) from a Content Provider. The content comprises data recorded, for example, on suitable media - such as, for instance, audio or video content or application software recorded on a DVD, CD or memory module. The content is recorded in encrypted form. Shown at 8 is a hardware device which in principle is capable of receiving the recorded media 6 and (when authorised as will be described) capable of decrypting it and allowing the user to play it or otherwise "consume" it. The hardware 8 may be special purpose hardware for the particular type of recorded media 6 (e.g. a DVD player) or it may be general purpose hardware such as a PC or laptop. In each case, though, the hardware 8 will contain a suitable application 10 in the form of software for enabling the content to be played. In accordance with a feature of the embodiment being described, the user's key 5 takes part in an authorisation process by which the application 10 in the hardware 8 is authorised to decrypt and play the recorded content.

More specifically, an authorisation system in the form of a licensing system 12 provides the key 5 with an authorisation or licence for allowing the content it to be decrypted and consumed by the application 10 on the device 8. The conditions of the licence will be carried by the key 5. In general, the licence will not restrict playing of the content to a particular device 8 but will allow it to be played on particular specified types of device (e.g. identified by manufacturer and model number), or on any suitable device, but in each case only by using an "Approved Application" (that is, using particular software-such as trusted software issued by a particular software provider).

In this way, when the user has obtained a licence in respect of particular content, the user can play the content on any one of a number of different (previously approved) devices using the Approved Application software identified in the licence - and is thus not restricted to use of a specifically identified device. In each case, though, playing of the content involves interaction between the key 5 and the device and the Approved Application, as will be explained in more detail below.

The licence in respect of particular content may impose other conditions such as, for example, expiration date, the number of operations permitted (such as the number of times that the content can be played), the type of permitted operations (for example, playing of the content is permitted but not recordal thereof), the time or date when the licence begins and the time or date when it ends. The licence conditions may be conditions imposed generally by the provider of the content or they may be such conditions modified for the particular content.

The key 5 is advantageously embodied in a smart card or SIM (Subscriber Identity Module), such as the SIM which the user has for their GSM cellular telecommunications handset and may be physically carried in a carrier or module by means of which it can be connected to the device 8. Instead, the SIM could be mounted in the user's handset in the usual way and could communicate with the device 8 via the handset such as through a wireless (e.g. Bluetooth (RTM)) or infra-red link.

The carrier or module for the user's SIM may be arranged to provide the user with more than one "identity" - that is, each such identity is capable of separate authentication. Thus, the carrier or module could incorporate more than one SIM or possibly a single SIM carrying the separate identities. In this way, for example, the user could have one identity as a member or employee of an organisation, corporate body or other entity, and another identity as a private individual.

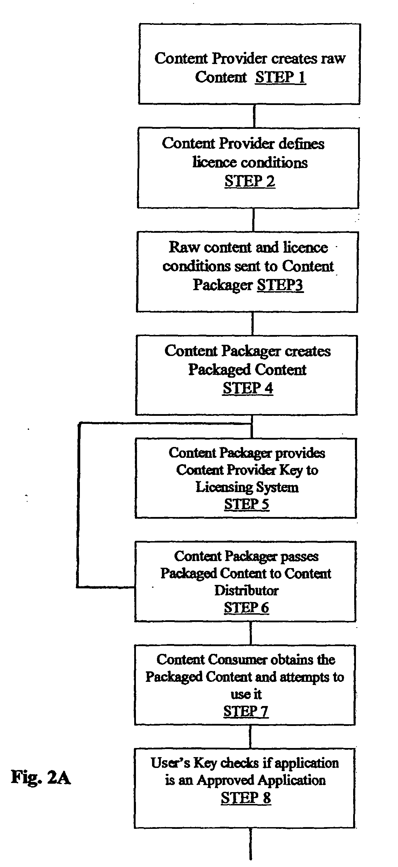

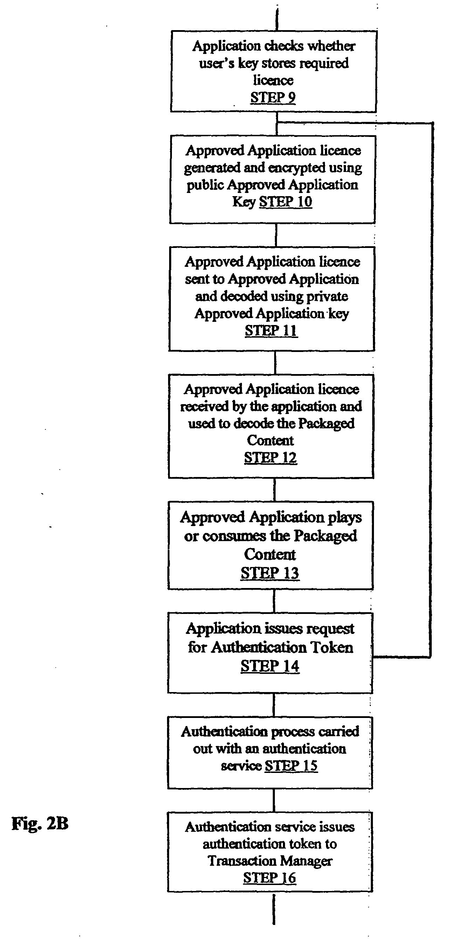

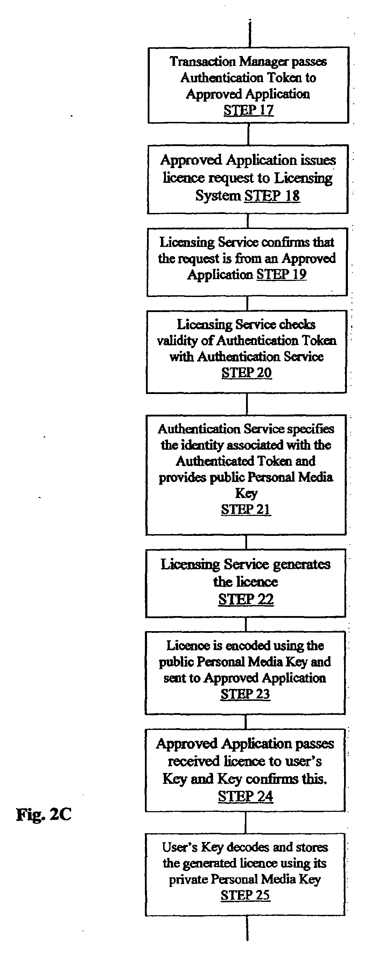

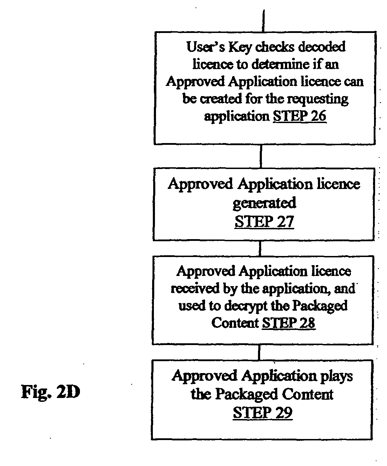

The processing involved in the system shown in Figure 1 will now be considered in greater detail with reference to the flow charts of Figure 2.

As shown in Figure 2, a Content Provider creates raw Content (Step 1), such as a recorded music item.

At Step 2, the Content Provider defines particular licence conditions that it wishes to apply to the Content (for example, how many times it can be played by each purchaser of the licence, the length of time between the start and end of the licence or the start and end dates, whether the Content can be merely played or whether it can be re-recorded by the licensee). Such licence conditions may be general conditions applied by the Content Provider or may be modified conditions applied to the particular content.

At Step 3, the raw Content together with the licence conditions imposed by the Content Provider are passed to a Content Packager.

At Step 4, the Content Packager creates "Packaged Content". In creating the Packaged Content, the Content Packager encodes the raw Content onto appropriate media together with a "Content Header". The Content Header incorporates the licence condition defined by the Content Provider together with a Content Provider Key. The Content Provider Key is a unique key specific to the particular Content Provider. The Content Packager provides the Content Provider Key to a selected Licensing System at Step 5. The Content Provider Key identifies the Content Provider to the Licensing System.

The Content Header incorporated in the Packaged Content by the Content Packager identifies the particular licensing system which is being used.

At Step 6, the Content Packager passes the Packaged Content to a Content Distributor. The Content Distributor may append additional metadata to the Content Header of the encoded content. The Packaged Content is now available for consumers.

At Step 7, a Content Consumer obtains the Packaged Content (that is, the encoded raw Content with its Content Header) and attempts to use it. The Content Consumer attempts to use the Packaged Content, using an appropriate device in which is included application software which is in principle suited for using or playing the content. Thus, for example, if the Packaged Content is recorded music (such as on a DVD), the consumer will attempt to play or use the content by means of a DVD player. More specifically, the user will attempt to activate the application in the device using their key or SIM. The user's key now checks if the application is an Approved Application (Step 8) ― that is, is the application a trusted application for which a licence can be granted? If the application is not an Approved Application, the process stops at that point; the user cannot play the Content with that application - that is, there is no possibility that the user can obtain a licence for using that application.

If the application is an Approved Application, the user's key then checks (Step 9) whether the User's Licence Store on the key stores a licence for the Content (or Content Provider) identified in the Content Header. The user's key contains a Licence Store for storing licences in respect of particular Content Providers or particular Content. The Approved Application encodes this request using the user's public Approved Application Key.

The user's key then decodes the request using the user's private Approved Application Key and checks whether its Licence Store is storing an appropriate Licence. If so, the Key then generates an Approved Application licence which it then encrypts using a public Approved Application Key which it holds (Step 10), and sends this to the Approved Application (Step 11) where it is decrypted using the private Approved Application Key.

The Approved Application uses the key contained in the Approved Application licence to decode the Packaged Content (Step 12).

The user can then use the now-licensed Approved Application to play or consume the Content (in accordance with the terms of the licence (Step 13).

If at Step 9 it is determined that no suitable licence is stored in the Licence Store of the Key, the Approved Application issues a request for an Authentication Token (Step 14). This request is issued to a Transaction Manager which may be incorporated in the device. The authentication token is then used to carry out an authentication process with an authentication service (Step 15). This process is carried out online and may involve the network provider which has provided the user with the SIM. The request for the authentication token will identify the intended recipient of the authentication token as the particular Licence System identified in the Content Header.

At Step 16, the Authentication Service issues an appropriate Authentication Token to the Transaction Manager which passes it to the Approved Application (Step 17).

At Step 18, the Approved Application then issues a licence request to the Licensing System identified in the Content Header. This licence request is passed to the Licensing System with the validated authentication token received from the authentication service in Step 17. At Step 19, the Licensing Service confirms that the request is from an Approved Application.

At Step 20, the Licensing Service confirms the validity of the Authentication Token by checking with the authentication service.

At Step 21, the authentication service responds by defining the identity which is associated with the Authentication Token and provides the corresponding public Personal Media Key to be used for generation of the licence.

Then, at Step 22, the Licensing Service generates the licence using the Content Provider Key (which it has received in Step 5) and using particular licence restrictions which it already stores in relation to that Content Provider (and, possibly, in relation to the particular content). The licence is then encoded using the public Personal Media Key for the particular user and is returned to the Approved Application at Step 23.

The Approved Application then passes the received licence to the user's Key which confirms that the Approved Application has passed the licence to it (Step 24). Then, at Step 25, the Key decodes and stores the generated licence, using its private Personal Media Key.

At Step 26, the Key checks the decoded licence to determine if an Approved Application licence can be created for the particular requesting application.

At Step 27, the Approved Application licence is generated and encoded using the public key of the Approved Application.

At Step 28, the Approved Application licence is then received by the Approved Application and decrypted to determine the key to decrypt the Packaged Content. The licence defines any restrictions that must be followed.

Finally, at Step 29, the Approved Application plays or consumes the Packaged Content.

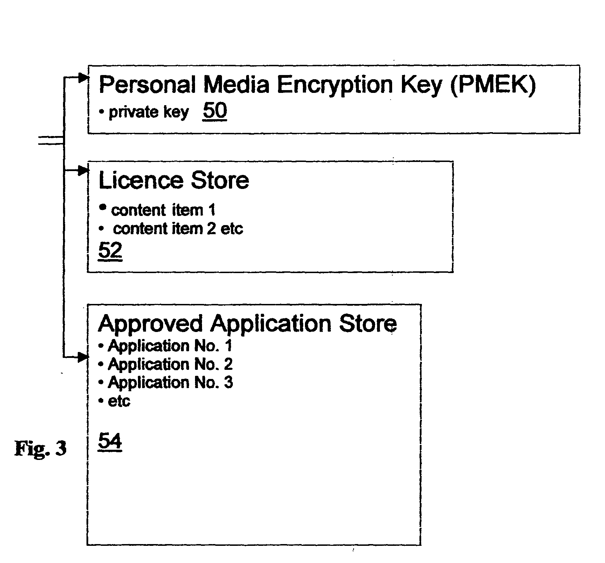

Figure 3 shows how the user's Key is arranged - that is, it shows the information stored on the user's SIM. Thus, the Key stores the user's private Personal Media Encryption Key as shown at 50. In addition, the Key contains a licence store 52, which stores the user holds for particular content or for particular content providers.
Finally, the Key contains a store 54 containing a list of Approved Applications. These Approved Applications are thus applications which are trusted and for which, therefore, the Key can provide a licence when needed by a particular Approved Application in the store in order to play specific content. As already explained in connection with Figure 2, such a licence can be derived from a licence already in the Key's Licence Store or, if no such licence is there, an appropriate licence can be obtained (by the Approved Application and the user's Key acting together, as explained) from an appropriate Licensing System.

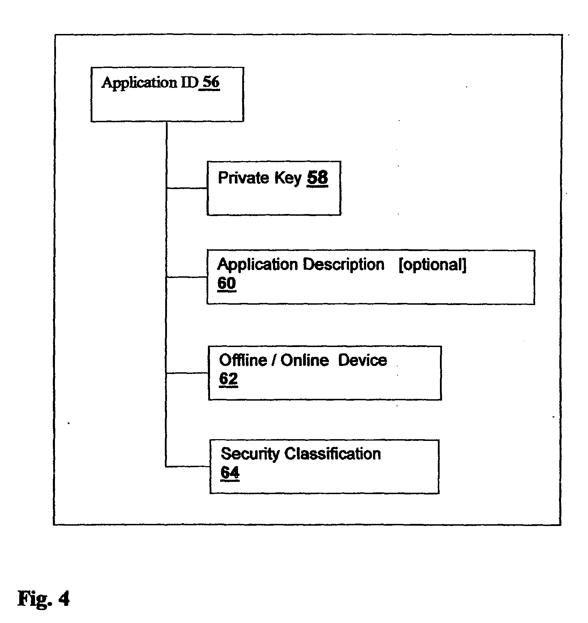

Figure 4 shows an entry in the Approved Application store 54 of Figure 3 - that is, the entry in respect of a particular Approved Application. Thus, the entry comprises the ID of the Approved Application as shown at 56, the private key appropriate to that Approved Application, as shown at 58; the description of the Approved Application, shown at 60 (this is an optional feature); an indication shown at 62 whether the application is used in an offline or an online device; and a security classification for the approved application, as shown at 64.

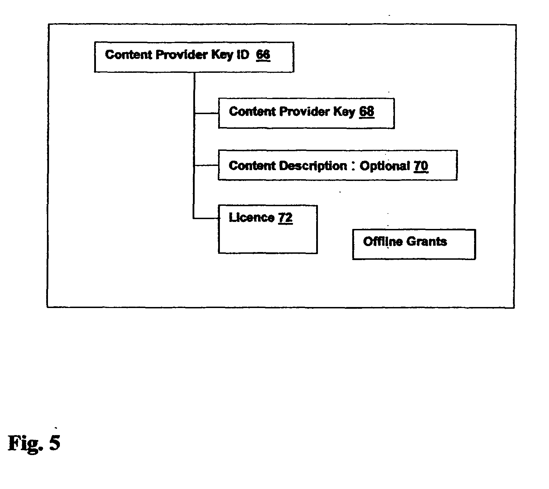

Figure 5 diagrammatically shows an entry in the licence store 52 (Figure 3) of the user's key. As shown, each entry is identified by the ID of the relevant Content Provider 66. Then the entry includes the unique Content Provider Key 68; a description (optional) of the content 70; and details of the licence 72.

## Claims

1. A data processing system, in which a content provider provides encoded content (6) to which users may have access subject to predetermined authorisation and using application software appropriate to the type of encoded content (6), comprising first storage means (54) for storing a list of approved applications and situated in a portable location, first processing means situated in the portable location and operative in response to a requesting application (10) attempting to access the encoded content (6) for a particular user to determine in dependence on the stored list of approved applications if the requesting application (10) is an approved application, second storage means (52) situated in the portable location for storing for each user authorisations which are respective to different encoded content (6), and second processing means situated in the portable location for allowing the requesting application (10) to access the encoded content (6) in response to the request from the requesting application (10) if it has been determined to be an approved application and if an authorisation is stored in the second storage means (52) for that user in relation to the encoded content, the access being subject to that authorisation.

2. A system according to claim 1, in which at least some of the authorisations are respective to different encoded content (6) by being respective to the content providers thereof.

3. A system according to claim 1 or 2, in which the storage and processing means are incorporated in a user's module.

4. A system according to any preceding claim, including means for determining the case when (a) the first processing means has determined for a particular user that the requesting application (10) is an approved application in relation to the encoded content (6) and (b) the second storage means (52) is not storing an authorisation for that user which is respective to that encoded content, and means operative in response to that case to attempt to obtain such authorisation from a separate authorisation store and to store it in the second storage means (52) in relation to that user.

5. A system according to claim 4, in which the authorisation store stores authorisations respective to different content providers and/or to different encoded content, and including means responsive to an authorisation request by an approved application which is attempting to access particular encoded content (6) to produce from the authorisation store the authorisation which is respective to that encoded content or to the content provider thereof and for storing that authorisation in the second storage means (52) for that user.

6. A system according to claim 5, in which the authorisation store is a respective one of a plurality of different authorisation stores and in which the authorisation request is made to a particular one thereof by the approved application according to identity data associated with the encoded content (6).

7. A system according to claim 5 or 6, in which the authorisation request identifies the user for whom the approved application is attempting to access the encoded data.

8. A system according to claim 7, in which the authorisation request is associated with identity data identifying the user and obtained from user authentication means.

9. A system according to claim 8, in which the authorisation store receives the identity data identifying the user and validates it with the user authentication means before allowing the authorisation to be produced.

10. A system according to any one of claims 4 to 9, in which the authorisation store confirms that the application (10) producing the authorisation request is an approved application before allowing the authorisation to be produced.

11. A data processing method, in which a content provider provides encoded content (6) to which users may have access subject to predetermined authorisation and using application software appropriate to the type of encoded content (6), comprising the steps of storing a list of approved applications in a portable location, responding to a requesting application (10) attempting to access the encoded content (6) for a particular user by determining in dependence on the stored list of approved applications if the requesting application (10) is an approved application, storing for each user in the portable location authorisations which are respective to encoded content provided by different content providers or respective to different encoded content (6), and allowing the requesting application (10) to access the encoded content (6) in response to the request from the requesting application (10) if it has been determined to be an approved application and if an authorisation is stored for that user in relation to the encoded content, the access being subject to that authorisation.

12. A method according to claim 11, in which at least some of the authorisations are respective to different encoded content (6) by being respective to the content providers thereof.

13. A method according to claim 11 or 12, including the step of determining the case when (a) it has been determined for a particular user that the requesting application (10) is an approved application in relation to the encoded content (6) and (b) no authorisation is stored for that user which is respective to that encoded content (6), and the step of responding to that case by attempting to obtain such authorisation from a separate authorisation store and storing such authorisation in relation to that user.

14. A method according to claim 13, including the step of responding to an authorisation request by an approved application which is attempting to access particular encoded content (6) by producing from the authorisation store the authorisation which is respective to that encoded content (6) or to the content provider thereof and for storing that authorisation in relation to that user.

15. A method according to claim 14, in which the authorisation store is a respective one of a plurality of different authorisation stores and in which the authorisation request is made to a particular one thereof by the approved application according to identity data associated with the encoded content (6).

16. A method according to claim 14 or 15, in which the authorisation request identifies the user for whom the approved application is attempting to access the encoded data.

17. A method according to claim 16, in which the authorisation request is associated with identity data identifying the user and which is obtained by an authentication step.

18. A method according to claim 17, in which the authorisation store receives the identity data identifying the user and validates it before allowing the authorisation to be produced.

19. A method according to any one of claims 14 to 18, in which the authorisation store confirms that the application (10) producing the authorisation request is an approved application before allowing the authorisation to be produced.
